(19) **Europäisches Patentamt / European Patent Office / Office européen des brevets**

(11) **EP 2 364 593 B1**

(12) **EUROPEAN PATENT SPECIFICATION**

(45) Date of publication and mention
of the grant of the patent:
**30.05.2018 Bulletin 2018/22**

(51) Int Cl.:
*A23G 3/34* (2006.01)          *A21B 5/03* (2006.01)
*A21B 7/00* (2006.01)          *A23G 3/00* (2006.01)

(21) Application number: **11157864.7**

(22) Date of filing: **11.03.2011**

(54) **Method and assembly for manufacturing dough products made of batter**

Methode und Vorrichtung zur Herstellung von Teigprodukten

Procédé et ensemble de fabrication de produits de pâte fabriqués à partir de pâte à frire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2010 NL 2004393**

(43) Date of publication of application:
**14.09.2011 Bulletin 2011/37**

(73) Proprietor: **Cérélia Development B.V.**
**3361 GN Sliedrecht (NL)**

(72) Inventor: **Vink, Jan**
**3356 LR, Papendrecht (NL)**

(74) Representative: **Peters, Sebastian Martinus**
**Octrooibureau Vriesendorp & Gaade B.V.**
**Koninginnegracht 19**
**2514 AB Den Haag (NL)**

(56) References cited:
| | |
|---|---|
| EP-A1- 1 229 268 | EP-A1- 2 105 051 |
| EP-A1- 2 172 108 | EP-A2- 0 580 430 |
| EP-A2- 1 958 517 | WO-A1-2006/124339 |
| WO-A1-2008/049119 | WO-A1-2010/151202 |
| WO-A2-2004/084648 | GB-A- 2 450 955 |
| JP-A- 2010 246 463 | US-A- 3 231 149 |
| US-A- 4 583 451 | US-A- 5 142 967 |
| US-A1- 2008 260 918 | US-A1- 2012 328 747 |
| US-B1- 6 280 785 | |

## Description

BACKGROUND OF THE INVENTION

The invention relates to a method and assembly for making dough products by depositing a batter on a heatable carrier. Examples of such dough products are pancakes, poffertjes (tiny Dutch pancakes) or crêpes.

US patent 4.583.451 describes a device for baking pancakes and discloses the features of the preambles of the independent claims. A dispenser for dispensing viscous fluids such as pancake batter is known from US 3 231 149 A. US 5 142 967 A discloses a method for making a waffle. The device according to US 4.583.451 comprises a belt conveyor that is heatable by a number of heat sources that have been placed between the drums of the belt conveyor. Near the upstream end of the conveyor belt, near the upstream drum, a dispenser is placed for discharging a predetermined quantity of batter on the conveyor belt. The dispenser comprises a number of hoppers for batter that are situated next to each other, and separated from each other by a partition, which hoppers each at the side facing the conveyor belt, are provided with one outlet aperture. Said outlet aperture can be closed by a slide that is also provided with an aperture. By at least partially aligning the aperture of the slide with the outlet aperture, a part of the batter for forming a pancake can flow through the outlet aperture and the aperture in the slide onto the conveyor belt. The slides of the various hoppers are jointly operated by cams placed on the upstream drum. In that case each cam will operate all slides of the various hoppers, wherein the aperture of each individual hopper ensures dispensing a quantity of the batter for making one entire pancake. The batter from one aperture will flow out into a substantially round shape on the carrier.

It is therefore a disadvantage of the known device that it can only make substantially round shaped pancakes, wherein the shape and distribution of thickness of the pancakes is determined by the flow-behaviour of the batter.

Further relevant state of the art can be found in GB 2 450 955 A, WO 2008/049119 A1, EP 2 172 108 A1, US 6 280 785 B1 and EP 2 105 051 A1.

SUMMARY OF THE INVENTION

It is among others an object of the present invention to provide a method with which among others pancakes can be made which as regards quality and texture can be compared with pancakes prepared according to traditional methods.

For that purpose the present invention provides a method as described in claim 1. Advantageous embodiments of the method according to the invention are described in the dependent claims.

According to the method use will be made of a conveyor having a heatable carrier on which the dough products to be made are conveyed, and with a first food jet printer comprising a number of adjacently placed individually controllable apertures, which method comprises the steps of:

- applying a layer of cooking oil (or a comparable shortening) on the carrier, and
- the first food jet printer applying a quantity of pancake batter on the layer of cooking oil applied on the carrier, wherein the carrier is moved with respect to the food jet printer by the conveyor, and wherein the food jet printer dispenses a preset quantity of pancake batter per position on the carrier. For making at least one of the dough products the food jet printer discharges a series of drops of the batter from the number of apertures according to a preset pattern, wherein at least a part of the dough product to be made is built up from drops coming from several apertures of the number of individually controllable apertures.

The invention is based on the insight that by means of a food jet printer the quantity and the position of pancake batter dispensed, that means discharged in portions, on the carrier can be accurately set. The food jet printer in particular dispenses drops of the pancake batter on the carrier according to a preset pattern. The pattern determines the shape of the pancake.

The quantity of pancake batter per position on the carrier is then determined by the number of drops that the food jet printer applies on or near a certain position. In one embodiment said number of drops per position is determined by controlling the frequency of dispensing the drops as a function of the position of the food jet printer with respect to the carrier.

The method according to the invention makes use of a so-called food jet printer.

Such food jet printers were recently developed, and are among others used for decorating foodstuffs, and for making foodstuffs built up from several layers. An example of such a food jet printer is described in Dutch patent 2000466, although meanwhile other food jet printers have become available on the market as well.

Dutch patent 2000466 describes a food jet printer for dispensing a second foodstuff such as a liquid, or a liquid substance such as for instance a suspension, an emulsion or a dispersion, on a first foodstuff. The food jet printer comprises a container for the liquid such as yoghurt, mayonnaise, sauce, oil, etc., on which several dispensing apertures are connected for in a controlled and aimed manner discharging or dispensing the liquid onto the first foodstuff. A characteristic property of a food jet printer is that each dispensing aperture can be individually controlled for discharging or not discharging one or more drops of the first foodstuff. The first foodstuff can in that case be a substantially solid substance, such as chocolate, or a jelly-like substance such as a pudding or yoghurt.

Although such food jet printers are used for decorating dough products, up until now they have not been used in making the dough products themselves, such as pancakes.

On the one hand it is possible for the food jet printer to apply the batter on a "cold" carrier (particularly having a temperature below the baking temperature), after which the carrier with the batter dispensed thereon is heated to a set baking temperature for baking the dough products, such as pancakes.

On the other hand it turned out that the method according to the invention can also be used on an already heated carrier. In one embodiment the method, prior to the first food jet printer applying a quantity of batter, comprises the step of heating the carrier substantially to a set baking temperature. By dispensing batter directly on a hot carrier, the liquidity of the dispensed batter will quickly be reduced due to baking. As a result the discharged batter will be substantially fixated on the position of discharge. Also as a result thereof the shape or contour of the dough product can be more accurately set. In that way pancakes and the like of diverse shapes can be made, such as heart-shaped, star-shaped or pine tree-shaped pancakes.

On the other hand the quantity of batter, and as a result of this also the thickness of the eventual pancake, can be set for a certain position on the carrier, for instance by setting the number of drops of batter discharged at a specific location.

In an advantageous embodiment of a method according to the invention the step of the first food jet printer applying a quantity of pancake batter on the layer of cooking oil applied on the carrier, is carried out such that the pancake has edges that are thinner than the rest of the pancake. The pattern of discharging the series of drops of the batter is adapted for at or near the edges of a dough product discharging fewer drops per position than in the middle of the dough product. By correct control of the food jet printer it is thus possible to make the edges of the pancakes thinner than the rest, so that the pancake made at least as regards looks and/or texture can be compared with pancakes prepared according to traditional methods.

In a further advantageous embodiment of a method according to the invention the step of the first food jet printer applying a quantity of pancake batter on the layer of cooking oil applied on the carrier, is carried out such that the quantity of pancake batter has an approximately centrally positioned part that is thinner than de rest of the quantity of pancake batter. The pattern of discharging the series of drops of the batter is in this case adapted for at the substantially centrally positioned part of a dough product, discharging fewer drops per position than at the part of the dough product that surrounds the central part. The method in particular further comprises the step of placing a filling, such as for instance jam, syrup, raisins, apple parts, cheese or sliced meats, for instance a slice of bacon, on the centrally positioned part.

On the one hand the thicker part of the pancake surrounding the central thin part may ensure that a viscous filling, such as jam or syrup, remains in its place. On the other hand placing a filling on a thinner central part may ensure that both the filling, such as the raisins, apple parts, cheese or sliced meats, and the part of the pancake dough on which the slice of bacon sits, are correctly baked.

In one embodiment the layer of cooking oil (or comparable shortening) is applied on the carrier by a second food jet printer that is placed upstream from the first food jet printer, at least considered in a conveyance direction of the conveyor. Because according to the inventive method use is made of a food jet printer for applying cooking oil (or a comparable shortening), the cooking oil can be dosed such that oil is only applied on those locations on the carrier where later on batter will be applied by the first food jet printer. In that way the quantity of oil required for the production of dough products consisting of batter can be considerably reduced.

In one embodiment the first food jet printer applies a first batter, and a further food jet printer, placed downstream from the first food jet printer, at least considered in conveyance direction of the conveyor, applies a second batter, wherein the second batter differs from the first batter. By using two different batters, which for instance differ in colour, dough products can be made in which visible figures have been arranged in the dough product. Said figures can be made in various ways:

In a first method the first food jet printer applies the decorative portions on the carrier. Subsequently the further food jet printer applies a base layer over substantially the whole surface of the dough product. After flipping the, at least partially cooked dough product, the decoration is visible at the top side.

In an alternative method the first food jet printer first applies a base layer on the carrier, which base layer substantially forms the entire surface of the dough product to be formed. Subsequently the further food jet printer applies decorative portions on the base layer.

In a second alternative method the first food jet printer applies a first portion of the dough product, and after that the further food jet printer applies the remaining parts of the dough products. The latter method has the advantage that the decoration can be visible on both sides of the dough product.

In a further alternative method the first food jet printer first applies a contour on the carrier, which contour is then at least partially filled in by the further food jet printer.

In one embodiment the food jet printer is provided with apertures such as small holes or small slots, for dispensing drops of batter. In one embodiment substantially each aperture of the food jet printer is individually controllable for ejecting or not ejecting a drop of pancake batter and for setting the frequency with which drops of pancake batter are ejected.

In one embodiment the food jet printer, at a side facing the carrier, is provided with a exchange plate provided with the apertures. In that way it is possible to change the shape and/or diameter of the apertures of the food jet printer by means of changing from the one exchange plate having apertures of a first type, to another exchange plate having apertures of a second type, and the food jet printer can be optimised for processing a specific type of batter.

In one embodiment the food jet printer comprises a row of adjacently positioned apertures, wherein the row is placed on a substantially straight line. In one embodiment the angle between the straight line and a conveyance direction of the conveyor can be set. As a result the pitch of the apertures, at least the projection thereof in the conveyance direction, can be set.

In one embodiment the apertures are formed as substantially circular holes. In one embodiment the centre-to-centre distance of two adjacent apertures is approximately four times as large as the diameter of the small holes. It has turned out that the dimensions of the food jet printer, for dispensing drops of pancake batter, in particular on a hot carrier, is an important factor in achieving the desired result. On the one hand the drops should not be too small, as otherwise the drops do not merge into each other sufficiently and the pancake would consist of an assembly of drops. On the other hand the drops should not be too large, as otherwise there would be too little resolution for decorative parts on the pancake. Advantageous results have been achieved with a food jet printer wherein the small holes are substantially one millimetre in diameter and the centre-to-centre distance of two adjacent holes is substantially four millimetres.

According to a second aspect the invention provides an assembly as described in claim 13. Advantageous embodiments of the assembly according to the invention are described in the dependent claims.

The assembly according to the invention comprises a conveyor having a heatable carrier on which the dough products to be made are conveyed, a first food jet printer placed over the conveyor, wherein the food jet printer is provided with a number of adjacently placed apertures for discharging drops of batter, wherein substantially each aperture of the food jet printer is individually controllable for ejecting or not ejecting a drop of batter, and a control unit adapted for controlling at least the food jet printer for making at least one of the dough products by discharging a series of drops of the batter from the number of apertures according to a preset pattern on the carrier, wherein at least a part of the dough product to be made is built up from drops coming from several apertures of the number of apertures. Apertures could be substantially circular holes, wherein the centre-to-centre distance of two adjacent holes is substantially four times as large as the diameter of the small holes. As an example, the small holes are substantially one millimetre in diameter and the centre-to-centre distance of two adjacent holes is substantially four millimetres.

In one embodiment a second food jet printer is placed upstream from the first food jet printer over the conveyor, at least considered in a conveyance direction of the conveyor, wherein the second food jet printer is adapted for dispensing drops of cooking oil (or a comparable shortening) on the carrier.

In one embodiment a further food jet printer is placed downstream from the first food jet printer over the conveyor, at least considered in a conveyance direction of the conveyor, wherein the further food jet printer is adapted for dispensing drops of batter.

In one embodiment the assembly further comprises heating elements or burners for heating the carrier to substantially a set baking temperature, at least before the carrier reaches the first food jet printer.

The aspects and measures described in this description and the claims of the application and/or shown in the drawings of this application may where possible also be used individually. Said individual aspects, and other aspects, may be the subject of divisional patent applications relating thereto. This particularly applies to the measures and aspects that are described per se in the sub claims.

SHORT DESCRIPTION OF THE DRAWINGS

The invention will be elucidated on the basis of a number of exemplary embodiments shown in the attached drawings, in which:

Figure 1 shows a schematic view in perspective of an assembly for baking pancakes;
Figure 2 shows a bottom view of a food jet printer for baking pancakes;
Figure 3 shows a schematic view in perspective of a second exemplary embodiment of an assembly for baking pancakes;
Figure 4 shows a schematic view in perspective of a third exemplary embodiment of an assembly for baking pancakes;
Figure 5 shows a schematic view in perspective of a fourth exemplary embodiment of an assembly for baking pancakes with decorations;
Figure 6 shows a schematic view in perspective of a fifth exemplary embodiment of an assembly for baking pancakes on baking trays;
Figure 7 shows a schematic view in cross-section of a pancake made according to a first exemplary method;
Figures 8A, 8B and 8C show a schematic view in cross-section of steps in various methods for making pancakes using two different batters; and
Figures 9A and 9B show a schematic view in cross-section of various steps in a further exemplary method for making pancakes.

DETAILED DESCRIPTION OF THE DRAWINGS

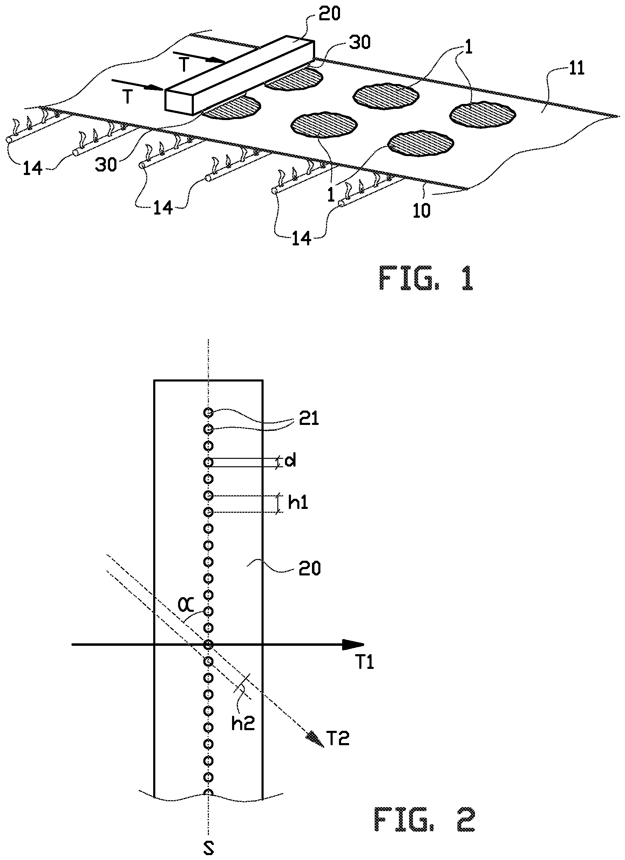

In the inventive method for making pancakes 1 use is made of a conveyor 10 that is generally known per se, which is provided with a carrier surface 11 that can be heated up to a baking temperature of around 180 degrees Celsius. For that purpose a series of burners 14 has been arranged below the conveyor 10 for heating the carrier surface 11. Instead of burners 14 other known heating elements can also be used. Above the hot carrier surface 11 a food jet printer 20 has been arranged, which at a side facing the carrier surface 11 is provided with a series S of holes 21 (see figure 2) for via the holes 21 dispensing drops of pancake batter 30 onto the carrier surface 11.

In the exemplary embodiment shown, the holes 21 have a diameter d of substantially one millimetre, and they are placed one behind the other in one line with a centre-to-centre distance h1 of substantially four millimetres.

The distance between the drops of pancake batter dispensed on the carrier surface 11 equals h1 for an arrangement in which the series S extends substantially transverse to the conveyance direction T1 of the conveyor 10. As schematically shown in figure 2 the distance between the drops dispensed on the carrier surface 11 can be reduced by placing the series S at an acute angle to the conveyance direction of the conveyor 10. For instance when the angle between the series S and the conveyance direction T2 encloses an angle $\alpha$, the distance h2, projected in the conveyance direction T2, between the drops equals:

$$h2 = h1 \sin \alpha$$

Thus the pitch of the holes 21 is adjustable by setting the angle $\alpha$.

Upstream from the food jet printer 20 the carrier surface is provided with a layer of cooking oil in the known manner, on which layer the food jet printer 20 dispenses drops of pancake batter 30 on the desired positions, which drops together form a pancake 1.

Because of the food jet printer 20, the quantity of pancake batter 30 to be applied on a certain position on the carrier surface 11, can be accurately set. In that way it becomes possible for the first time in an industrial process for making pancakes, to apply a quantity of pancake batter 30 on the layer of cooking oil applied on the carrier 11, such that the quantity of pancake batter 30 near the edges is less than the rest of the pancake 1 to be formed, particularly due to suitable control of the food jet printer 20, as a result of which the pancakes 1 made acquire the shape and texture of pancakes prepared according to traditional methods.

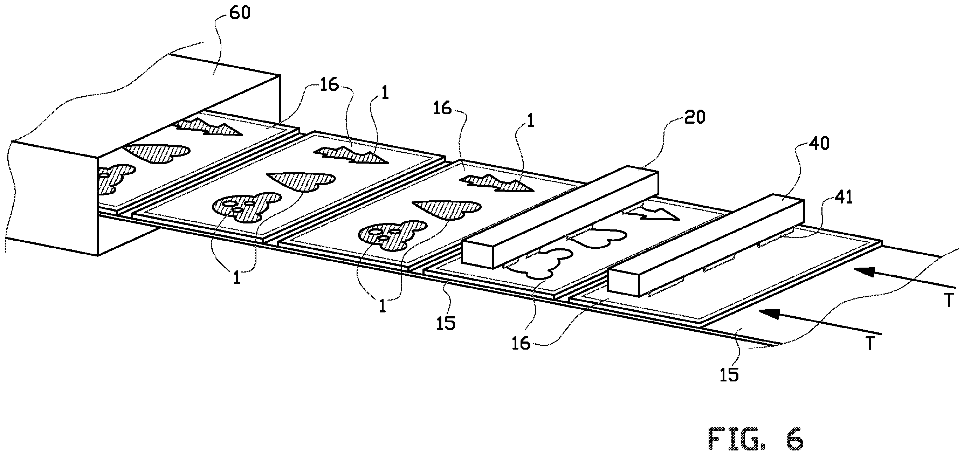

Additionally or alternatively due to suitable control of the food jet printer 20, the food jet printer 20 applying a quantity of pancake batter 30 on the layer of cooking oil applied on the carrier 11, can be carried out such that the quantity of pancake batter has an at least almost centrally positioned part that is less than the rest of the quantity of pancake batter. As a result the pancake 1 will at this centrally positioned part be substantially thinner than the rest of the pancake. On this centrally positioned part a slice of bacon 2 can be placed, as schematically shown in cross-section in figure 6.

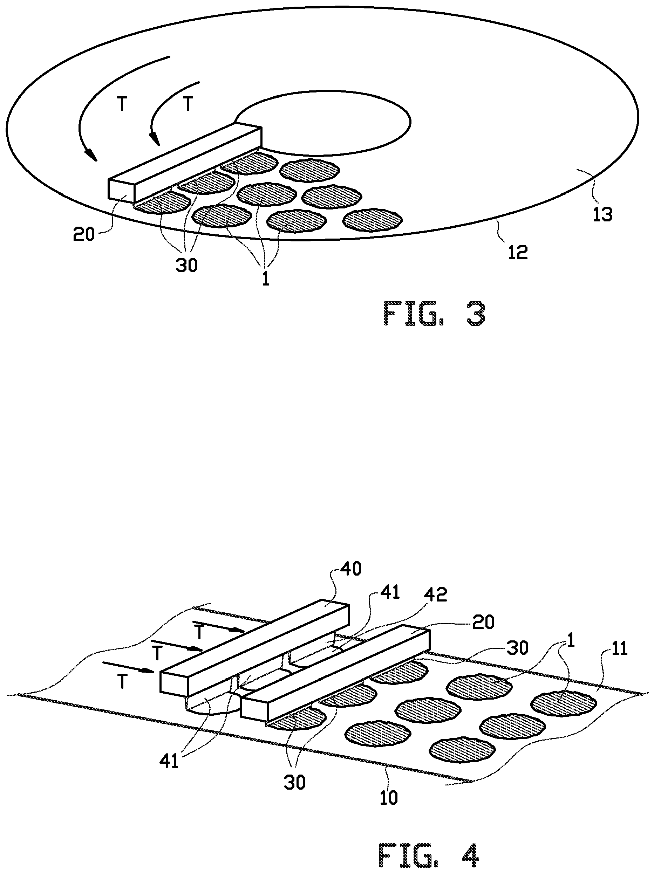

In a second exemplary embodiment, as shown in figure 3, the conveyor 12 is designed like a disk having a round carrier surface 13. Such an embodiment is for instance used in fixed-disk ovens. Particularly for such a carrier surface 13 a food jet printer 20 is highly suitable, as a food jet printer can take radial speed differences of the conveyor into account. In that way the food jet printer 20 can be placed at a fixed position over the conveyor 12. The food jet printer 20 is able to dispense pancake batter 30 onto the carrier 13 without moving along with the carrier surface 13, wherein a staggered placement of the pancakes 1 on the carrier surface 13 can also be taken into account, staggered placement meaning that further away from the centre of the conveyor more pancakes 1 can be placed on a perimeter than more towards the centre.

In a third exemplary embodiment, as shown in figure 4, a second food jet printer 40 is placed upstream, at least considered in the conveyance direction T of the conveyor 11, over the carrier surface 11. Said second food jet printer 40 is adapted for discharging drops of cooking oil 41 onto the carrier 11. For discharging oil the second food jet printer 40 is provided with holes that are smaller than the holes for discharging pancake batter. As a result it is possible to apply a layer of cooking oil 41 only on those positions on the carrier surface 11 where later on the first food jet printer 20 will discharge pancake batter 30. The layers of cooking oil 41 therefore have a surface shape 42 comparable with the pancakes 1 to be made.

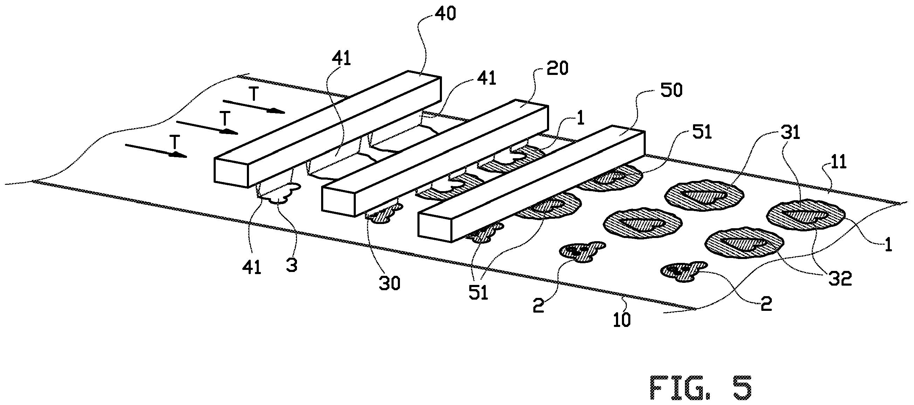

In a fourth exemplary embodiment, as shown in figure 5, a further, in this case a third food jet printer 50 is placed downstream, at least considered in the conveyance direction T of the conveyor 11, over the carrier surface 11. Said third food jet printer 50 is adapted for discharging drops of pancake batter 51 having a substantially different composition than the pancake batter 30 from the first food jet printer 20. Preferably the pancake batter 51 from the third food jet printer has a different colour than the pancake batter 30 from the first food jet printer. In that way pancakes 1 can be made that have a first surface part 31 formed out of the first pancake batter 30 and a second surface part 32 formed out of the second pancake batter 51. In that way the pancakes 1 can be provided with a decoration as schematically shown in figure 5.

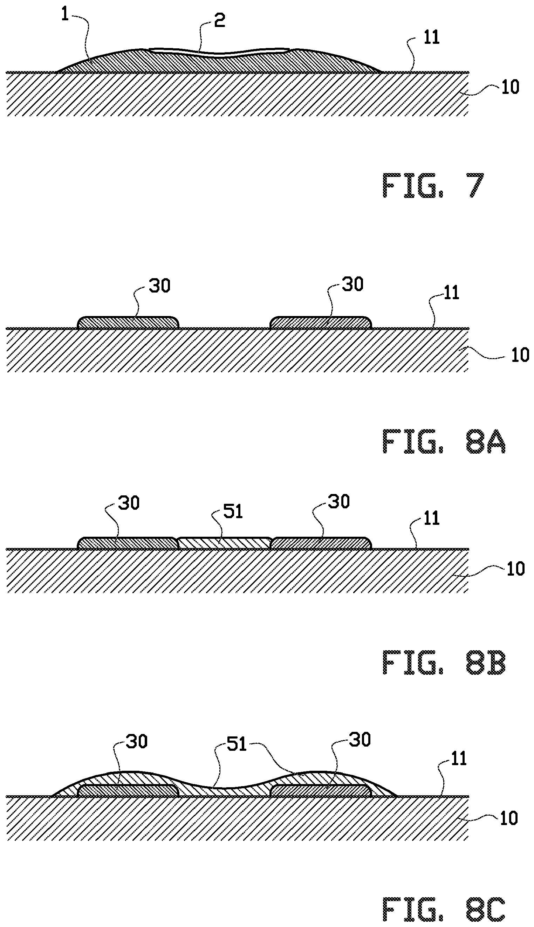

As shown in figure 5 first the first surface part 31 can be made by dispensing the first pancake batter 30 on the desired locations on the carrier surface 11 (see figure 8A), and after that on the as yet empty locations on the carrier surface 11, the second pancake batter 51 is dispensed (see figure 8B) for forming the second surface part 32.

In addition it is also possible to dispense the first pancake batter 30 on the desired locations first (figure 8A), and after that dispensing the second pancake batter 51 over the entire pancake surface on the carrier 11 (see figure 8C). The two different surface parts will not be visible until after flipping the pancake.

Furthermore pancakes 2 can be produced that have a different shape, such as the head of a bear. For that purpose cooking oil 41 is dispensed on the carrier surface 11, substantially in the desired shape 3 of the pancake, the carrier surface 11 preferably being heated to a set baking temperature for instance by means of burners 14 as shown in figure 1. Subsequently pancake batter 30 is dispensed on the cooking oil 41 by the first food jet printer 20 for forming the contour of the pancake 2, after which further shapes, such as eyes and nose, are filled in by the third food jet printer.

In a fifth exemplary embodiment, as shown in figure 6, use is made of a series of baking trays 16 that are connected to a chain conveyor 15. In this case the chain conveyor 15 passes through the baking trays 16 below a second food jet printer 40 for dispensing drops of cooking oil 41 on the baking trays 16. Subsequently the baking trays 16 are passed through below a first food jet printer 20 for discharging drops of pancake batter for forming a thin layer of pancake batter 1 on the baking trays 16, for instance in the shape of a pine tree, a heart or a face. Naturally the usual round pancakes can also be made in the same way. Subsequently the baking trays 16 are passed into an oven 60 for baking the pancakes on the baking trays 16.

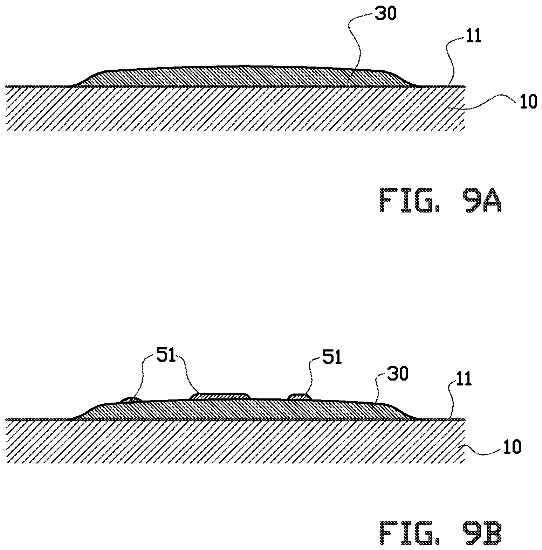

In figure 9A the first pancake batter 30 is applied first on the entire pancake surface on the carrier 11, and subsequently the second pancake batter 51 is applied on the wanted positions, as shown in figure 9B.

Due to correct individual operation of the apertures 20, the time at which said nozzles discharge the product in question, oil 41 or pancake batter 30, 51, can be controlled, and it can also be controlled which nozzles 20 can discharge the product in question so that it is possible to apply the product in question in various shapes on the carrier 11, 13 on the conveyor 10, 12.

According to the inventive method use is made of at least a first food jet printer 20. The first food jet printer 20 applies a quantity of pancake batter 30 on the layer of cooking oil applied on the carrier 11, 13. Its shape may be oval, round or another shape due to suitable control of the nozzles 20. The whole of a layer of cooking oil and quantity of pancake batter thus applied thereon are usually baked directly on the hot carrier 11, 13.

In an alternative method the carrier with the layer of pancake batter sitting thereon can also be passed through an oven to bake the pancakes.

Naturally it is possible in addition to the third food jet printer 50, to provide a fourth or even a further food jet printer, in which way layered pancakes can be made, or in which way different colours of pancake batter can be applied for providing attractively looking pancakes.

Summarizing the invention thus relates to a method and assembly for making dough products built up from a batter, such as pancakes. In the method use is made of a conveyor having a heatable carrier on which the pancakes to be made are conveyed, and with a first food jet printer having individually controllable apertures.

## Claims

1. Method for manufacturing dough products (1) by depositing a batter on a heatable carrier (11, 13, 16), using a conveyor (10, 12, 15) including the heatable carrier (11, 13, 16) on which the dough products to be made are conveyed, whereby use is made of a first food jet printer (20) comprising a number of adjacently placed individually controllable apertures (21), wherein the method comprises the steps of:

   - applying a layer of cooking oil or a comparable shortening on the carrier (11, 13, 16), and
   - the first food jet printer (20) applying a quantity of batter (30) on the layer of cooking oil applied on the carrier (11, 13, 16), wherein the carrier (11, 13, 16) is moved with respect to the food jet printer (20) by the conveyor (10, 12, 15), and wherein the food jet printer for making at least one of the dough products (1) controls the controllable apertures (21) to discharge a series of drops of the batter from a number of the apertures, wherein the series of drops form a pre-set pattern on the carrier (11, 13, 16),

   **characterized in that**,

   - the first food jet printer comprises individually controllable apertures (21), and
   - the food jet printer for making at least one of the dough products (1) individually controls the individually controllable apertures (21) to discharge a series of drops of the batter from a number of the individually controllable apertures, wherein the series of drops form a pre-set pattern on the carrier (11, 13, 16), wherein at least a part of the dough product to be made is built up from drops coming from several apertures of the number of the individually controllable apertures (21).

2. Method according to claim 1, wherein the layer of cooking oil (or a comparable shortening) is applied on the carrier by a second food jet printer (40) that is placed upstream from the first food jet printer (20), at least considered in a conveyance direction (T) of the conveyor (10, 12, 15), wherein the cooking oil (41) is dosed such that oil is only applied on those locations on the carrier (11, 13, 16), where later on the batter (30) will be applied by the first food jet printer (20).

3. Method according to claim 1 or 2, wherein the pattern of discharging the series of drops of the batter (30) is adapted for making a dough product having edges that are thinner than the rest of the dough product.

4. Method according to any one of the preceding claims, wherein the pattern of discharging the series of drops of the batter (30) is adapted for making a dough product having an at least approximately centrally positioned part that is thinner than the rest of the quantity of batter, preferably wherein the method furthermore comprises the step of placing a filling on the centrally positioned part.

5. Method according to any one of the preceding claims, wherein the first food jet printer (20) applies a first batter (30), and wherein a further food jet printer (50), placed downstream from the first food jet printer (20), at least considered in conveyance direction (T) of the conveyor (10), applies a second batter (51), wherein the second batter differs from the first batter.

6. Method according to claim 5, wherein the first food jet printer (20) applies decorative portions on the carrier (11), and wherein subsequently the further food jet printer (50) applies a base layer over substantially the whole surface of the dough products.

7. Method according to claim 5, wherein the first food jet printer (20) first applies a base layer on the carrier (11), which substantially forms the entire surface of the dough products to be formed, and wherein subsequently the further food jet printer (50) applies decorative portions on the base layer.

8. Method according to claim 5, wherein the first food jet printer (20) applies a first portion of the dough products, and wherein after that the further food jet printer (50) applies the remaining parts of the dough products.

9. Method according to claim 5, wherein the first food jet printer (20) first applies a contour on the carrier (11), which contour is then at least partially filled in by the further food jet printer (50) .

10. Method according to any one of the preceding claims, wherein the carrier (11, 13, 16) is heated to substantially a set baking temperature before the carrier reaches the first food jet printer (20).

11. Method according to any one of the preceding claims for making pancakes, poffertjes (tiny Dutch pancakes), crêpes or the like.

12. Assembly for baking dough products, comprising:

a conveyor (10, 12, 15) having a heatable carrier (11, 13, 16) on which the dough products (1) to be made are conveyed,
whereby the assembly further comprises a first food jet printer (20) placed over the conveyor (10, 12, 15), wherein the food jet printer (20) is provided with a number of adjacently placed apertures (21) for dispensing drops of a batter (30), **characterized in that** substantially each aperture (21) of the food jet printer (20) is individually controllable for ejecting or not ejecting drops of batter (30), wherein the assembly further comprises:
a control unit for controlling the individually controllable apertures (21) for making at least one of the dough products by dispensing a series of drops of the batter (30) from the number of apertures (21) to form a pre-set pattern on the carrier (11, 13, 16), wherein at least a part of the dough product to be made is built up from drops coming from several of the individually controllable apertures of the number of the individually controllable apertures (21) .

13. Assembly according to claim 12, wherein a second food jet printer (40) is placed upstream from the first food jet printer (20) over the conveyor (10, 12, 15), at least considered in a conveyance direction (T) of the conveyor, wherein the second food jet printer (40) is adapted for dispensing drops of cooking oil (41) or a comparable shortening on the carrier (11, 13, 16) only on those locations on the carrier, where later on the batter (30) will be applied by the first food jet printer (20).

14. Assembly according to claim 12 or 13, wherein apertures (21) are substantially circular holes and wherein the centre-to-centre distance of two adjacent holes is substantially four times as large as the diameter of the small holes, preferably wherein the small holes are substantially one millimetre in diameter and the centre-to-centre distance of two adjacent holes is substantially four millimetres.

15. Assembly according to claim 12, 13 or 14, wherein a further food jet printer (50) is placed downstream from the first food jet printer (20) over the conveyor (10, 12, 15), at least considered in a conveyance direction (T) of the conveyor, wherein the further food jet printer (50) is adapted for dispensing drops of pancake batter (51).

16. Assembly according to any one of the claims 12 - 15, furthermore comprising heating elements (14) for heating the carrier (11, 13, 16) to substantially a set baking temperature before the carrier reaches the first food jet printer (20).

**Patentansprüche**

1. Verfahren zur Herstellung von Teigprodukten (1) durch Aufbringen eines Backteigs auf einen beheizbaren Träger (11, 13, 16) unter Verwendung eines den beheizbaren Träger (11, 13, 16) umfassende Förderanlage (10, 12, 15), auf dem die herzustellenden Teigprodukte transportiert werden, wobei ein erster Nahrungsmittelstrahldrucker (20) mit einer Anzahl benachbart angeordneter Öffnungen (21) Verwendung findet, wobei das Verfahren die Schritte umfasst:

   - Aufbringen einer Schicht Speiseöl oder eines vergleichbaren Backfetts auf den Träger (11, 13, 16), und
   - Aufbringen einer Menge von Teig (30) auf die auf den Träger (11, 13, 16) aufgebrachte Schicht aus Speiseöl durch den ersten Nahrungsmittelstrahldrucker (20), wobei der Träger (11, 13, 16) mittels der Förderanlage (10, 12, 15) bezüglich des Nahrungsmittelstrahldruckers (20) bewegt wird, und wobei der Nahrungsmittelstrahldrucker zum Herstellen zumindest eines der Teigprodukte (1) die steuerbaren Öffnungen (21) dazu steuert, eine Reihe von Tropfen des Teigs aus einer Anzahl der Öffnungen abzugeben, wobei die Reihe von Tropfen auf dem Träger (11, 13, 16) ein vorgegebenes Muster ausbildet,

   **dadurch gekennzeichnet, dass**

   - der erste Nahrungsmittelstrahldrucker einzeln steuerbare Öffnungen (21) aufweist, und
   - der Nahrungsmittelstrahldrucker zum Herstellen zumindest eines der Teigprodukte (1) die einzeln steuerbaren Öffnungen (21) einzeln steuert, um eine Reihe von Tropfen des Teigs aus einer Anzahl der einzeln steuerbaren Öffnungen abzugeben, wobei die Reihe von Tropfen auf dem Träger (11, 13, 16) ein vorgegebenes Muster ausbildet, wobei zumindest ein Teil des herzustellenden Teigprodukts aus Tropfen aufgebaut wird, die aus mehreren Öffnungen der Anzahl der einzeln steuerbaren Öffnungen (21) kommen.

2. Verfahren nach Anspruch 1, bei dem die Schicht aus Speiseöl (oder einem vergleichbaren Backfett) auf den Träger mittels eines zweiten Nahrungsmittelstrahldruckers (40) aufgebracht wird, der zumindest in einer Transportrichtung (T) der Förderanlage (10, 12, 15) betrachtet stromaufwärts des ersten Nahrungsmittelstrahldruckers (20) angeordnet ist, wobei das Speiseöl (41) so dosiert wird, dass das Öl nur auf solche Stellen auf dem Träger (11, 13, 16) aufgebracht wird, auf die später mittels des ersten Nahrungsmittelstrahldruckers (20) der Backteig (30) aufgebracht wird.

3. Verfahren nach Anspruch 1 oder 2, wobei das Muster des Abgebens der Reihe von Tropfen des Backteigs (30) zum Herstellen eines Teigprodukts mit Rändern geeignet ist, die dünner sind als der Rest des Teigprodukts.

4. Verfahren nach einem der vorhergehenden Ansprüche, bei dem das Muster des Abgebens der Reihe von Tropfen des Backteigs (30) zum Herstellen eines Teigprodukts mit einem zumindest ungefähr mittig angeordneten Teil geeignet ist, der dünner ist als der Rest der Backteigmenge, wobei das Verfahren vorzugsweise ferner den Schritt des Anordnens einer Füllung auf dem mittig angeordneten Teil umfasst.

5. Verfahren nach einem der vorhergehenden Ansprüche, bei dem der erste Nahrungsmittelstrahldrucker (20) einen ersten Backteig (30) aufbringt und bei dem ein zumindest in Förderrichtung (T) der Förderanlage (10) betrachtet stromabwärts des ersten Nahrungsmittelstrahldruckers (20) angeordneter, weiterer Nahrungsmittelstrahldrucker (50) einen zweiten Backteig (51) aufbringt, wobei der zweite Backteig sich von dem ersten Backteig unterscheidet.

6. Verfahren nach Anspruch 5, bei dem der erste Nahrungsmittelstrahldrucker (20) dekorativen Anteile auf den Träger (11) aufbringt und wobei anschließend der weitere Nahrungsmittelstrahldrucker (50) eine Basisschicht über im Wesentlichen die gesamte Oberfläche der Teigprodukte aufbringt.

7. Verfahren nach Anspruch 5, bei dem der erste Nahrungsmittelstrahldrucker (20) zuerst eine Basisschicht auf den Träger (11) aufbringt, die im Wesentlichen die gesamte Oberfläche der herzustellenden Teigprodukte ausbildet, und bei dem anschließend der weitere Nahrungsmittelstrahldrucker (50) dekorative Anteile auf die Basisschicht aufbringt.

8. Verfahren nach Anspruch 5, bei dem der erste Nahrungsmittelstrahldrucker (20) einen ersten Teil der Teigprodukte aufbringt und bei dem danach der weitere Nahrungsmittelstrahldrucker (50) die verbleibenden Teile der Teigprodukte aufbringt.

9. Verfahren nach Anspruch 5, bei dem der erste Nahrungsmittelstrahldrucker (20) zunächst einen Umriss auf den Träger (11) aufbringt, wobei der Umriss dann zumindest teilweise mittels des weiteren Nahrungsmittelstrahldruckers (50) ausgefüllt wird.

10. Verfahren nach einem der vorhergehenden Ansprüche, bei dem der Träger (11, 13, 16) auf im Wesentlichen eine eingestellte Backtemperatur aufgeheizt wird, bevor der Träger den ersten Nahrungsmittelstrahldrucker (20) erreicht.

11. Verfahren nach einem der vorhergehenden Ansprüche zum Herstellen von Pfannkuchen, Poffertjes (kleine holländische Pfannkuchen), Crêpes oder ähnlichem.

12. Anordnung zum Backen von Teigprodukten, mit:

einer Förderanlage (10, 12, 15) mit einem beheizbaren Träger (11, 13, 16), auf dem die herzustellenden Teigprodukte (1) transportiert werden,
wobei die Anordnung ferner einen über der Förderanlage (10, 12, 15) angeordneten ersten Nahrungsmittelstrahldrucker (20) umfasst, wobei der Nahrungsmittelstrahldrucker (20) mit einer Anzahl benachbart angeordneter Öffnungen (21) zum Abgeben von Tropfen eines Backteigs (30) versehen ist,
**dadurch gekennzeichnet, dass** im Wesentlichen jede Öffnung (21) des Nahrungsmittelstrahldruckers (20) einzeln steuerbar ist zum Ausstoßen oder Nichtausstoßen von Tropfen des Backteigs (30), wobei die Anordnung ferner aufweist:
eine Steuereinheit zum Steuern der einzeln steuerbaren Öffnungen (21) zum Herstellen mindestens eines der Teigprodukte durch Abgeben einer Reihe von Tropfen des Backteigs (30) aus der Anzahl von Öffnungen (21) zum Ausbilden eines vorgegebenen Musters auf dem Träger (11, 13, 16), wobei zumindest ein Teil des herzustellenden Teigprodukts aus Tropfen aufgebaut wird, die aus mehreren der einzeln steuerbaren Öffnungen der Anzahl der einzeln steuerbaren Öffnungen (21) kommen.

13. Anordnung nach Anspruch 12, bei der ein zweiter Nahrungsmittelstrahldrucker (40) zumindest in einer Förderrichtung (T) der Förderanlage betrachtet stromaufwärts des ersten Nahrungsmittelstrahldruckers (20) über dem Förderanlage (10, 12, 15) angeordnet ist, wobei der zweite Nahrungsmittelstrahldrucker (40) zum Abgeben von Tropfen aus Speiseöl (41) oder eines vergleichbaren Backfetts auf den Träger (11, 13, 16) nur auf solche Stellen auf dem Träger geeignet ist, auf die später mittels des ersten Nahrungsmittelstrahldruckers (20) der Backteig (30) aufgebracht wird.

14. Anordnung nach Anspruch 12 oder 13, bei der die Öffnungen (21) im Wesentlichen kreisförmige Löcher sind und bei der der Abstand von Mitte zu Mitte zweier benachbarter Löcher im Wesentlichen viermal so groß ist wie der Durchmesser der kleinen Löcher, wobei vorzugsweise die kleinen Löcher einen Durchmesser von im Wesentlichen einem Millimeter haben und der Abstand von Mitte zu Mitte zweier benachbarter Löcher im Wesentlichen vier Millimeter beträgt.

15. Anordnung nach Anspruch 12, 13 oder 14, bei der ein weiterer Nahrungsmittelstrahldrucker (50) zumindest in einer Förderrichtung (T) der Förderanlage betrachtet stromabwärts des ersten Nahrungsmittelstrahldruckers (20) über dem Förderanlage (10, 12, 15) angeordnet ist, wobei der weitere Nahrungsmittelstrahldrucker (50) zum Abgeben von Tropfen aus Pfannkuchenteig (51) geeignet ist.

16. Anordnung nach einem der Ansprüche 12 bis 15, ferner aufweisend Heizelemente (14) zum Beheizen des Trägers (11, 13, 16) auf im Wesentlichen eine eingestellte Backtemperatur, bevor der Träger den ersten Nahrungsmittelstrahldrucker (20 erreicht.

**Revendications**

1. Procédé pour fabriquer des produits de pâte (1) en déposant une pâte à frire sur un support pouvant être chauffé (11, 13, 16), en utilisant un transporteur (10, 12, 15) comprenant le support pouvant être chauffé (11, 13, 16) sur lequel les produits de pâte à réaliser sont transportés, moyennant quoi on utilise une première imprimante alimentaire à jet (20) comprenant un certain nombre d'ouvertures (21) placées de manière adjacente, dans lequel le procédé comprend les étapes suivantes :

appliquer une couche d'huile de cuisson ou une graisse alimentaire comparable sur le support (11, 13, 16), et
la première imprimante alimentaire à jet (20) appliquant une certaine quantité de pâte à frire (30) sur la couche d'huile de cuisson appliquée sur le support (11, 13, 16), dans lequel le support (11, 13, 16) est déplacé par rapport à l'imprimante alimentaire à jet (20) par le transporteur (10, 12, 15), et dans lequel l'imprimante alimentaire à jet pour fabriquer au moins l'un des produits de pâte (1) contrôle les ouvertures contrôlables (21) pour décharger une série de gouttes de pâte à frire par un certain nombre d'ouvertures, dans lequel la série de gouttes forme un motif prédéterminé sur le support (11, 13, 16), **caractérisé en ce que** :

la première imprimante alimentaire à jet comprend des ouvertures (21) individuellement contrôlables, et

l'imprimante alimentaire à jet pour fabriquer au moins l'un des produits de pâte (1) contrôle individuellement les ouvertures (21) individuellement contrôlables pour décharger une série de gouttes de la pâte à frire par un certain nombre d'ouvertures individuellement contrôlables, dans lequel la série de gouttes forme un motif prédéterminé sur le support (11, 13, 16), dans lequel au moins une partie du produit de pâte à réaliser, est constituée à partir des gouttes provenant de la pluralité d'ouvertures du nombre d'ouvertures (21) individuellement contrôlables.

2. Procédé selon la revendication 1, dans lequel la couche d'huile de cuisson (ou une graisse alimentaire comparable) est appliquée sur le support par une seconde imprimante alimentaire à jet (40) qui est placée en amont de la première imprimante alimentaire à jet (20), au moins considérée dans la direction de transport (T) du transporteur (10, 12, 15), dans lequel l'huile de cuisson (41) est dosée de sorte que l'huile est uniquement appliquée sur ces emplacements sur le support (11, 13, 16), où cette dernière, sur la pâte à frire (30), est appliquée par la première imprimante alimentaire à jet (20).

3. Procédé selon la revendication 1 ou 2, dans lequel le motif de décharge de la série de gouttes de la pâte à frire (30) est adapté pour réaliser un produit de pâte ayant des bords qui sont plus fins que le reste du produit de pâte.

4. Procédé selon l'une quelconque des revendications précédentes, dans lequel le motif de décharge de la série de gouttes de la pâte à frire (30) est adapté pour réaliser un produit de pâte ayant au moins une partie positionnée à peu près de manière centrale qui est plus fine que le reste de la quantité de pâte à frire, de préférence dans lequel le procédé comprend en outre l'étape pour placer une garniture sur la partie positionnée de manière centrale.

5. Procédé selon l'une quelconque des revendications précédentes, dans lequel la première imprimante alimentaire à jet (20) applique une première pâte à frire (30), et dans lequel une autre imprimante alimentaire à jet (50), placée en aval de la première imprimante alimentaire à jet (20), au moins considérée dans la direction de transport (T) du transporteur (10), applique une seconde pâte à frire (51), dans lequel la seconde pâte à frire est différente de la première pâte à frire.

6. Procédé selon la revendication 5, dans lequel la première imprimante alimentaire à jet (20) applique parties décoratives sur le support (11), et dans lequel ensuite l'autre imprimante alimentaire à jet (50) applique une couche de base sensiblement sur toute la surface des produits de pâte.

7. Procédé selon la revendication 5, dans lequel la première imprimante alimentaire à jet (20) applique tout d'abord une couche de base sur le support (11), qui forme sensiblement toute la surface des produits de pâte à former, et dans lequel ensuite l'autre imprimante alimentaire à jet (50) applique des parties décoratives sur la couche de base.

8. Procédé selon la revendication 5, dans lequel la première imprimante alimentaire à jet (20) applique une première partie des produits de pâte, et dans lequel après que l'autre imprimante alimentaire à jet (50) a appliqué les parties résiduelles des produits de pâte.

9. Procédé selon la revendication 5, dans lequel la première imprimante alimentaire à jet (20) applique tout d'abord un contour sur le support (11), lequel contour est ensuite au moins partiellement rempli par l'autre imprimante alimentaire à jet (50).

10. Procédé selon l'une quelconque des revendications précédentes, dans lequel le support (11, 13, 16) est chauffé sensiblement à une température de cuisson nominale avant que le support n'atteigne la première imprimante alimentaire à jet (20).

11. Procédé selon l'une quelconque des revendications précédentes, pour réaliser des pancakes, des poffertjes (petits pancakes hollandais), des crêpes ou similaires.

12. Ensemble pour faire cuire des produits de pâte comprenant :

un transporteur (10, 12, 15) ayant un support pouvant être chauffé (11, 13, 16) sur lequel les produits de pâte (1) à réaliser sont transportés, moyennant quoi l'ensemble comprend en outre une première imprimante alimentaire à jet (20) placée sur le transporteur (10, 12, 15), dans lequel l'imprimante alimentaire à jet (20) est prévue avec un certain nombre d'ouvertures (21) placées de manière adjacente pour distribuer des gouttes d'une pâte à frire (30), **caractérisé en ce que** sensiblement chaque ouverture (21) de l'imprimante alimentaire à jet (20) est individuellement contrôlable pour éjecter ou ne pas éjecter des gouttes de pâte à frire (30), dans lequel l'ensemble comprend en outre :
une unité de contrôle pour contrôler les ouvertures (21) individuellement contrôlables pour réaliser au moins l'un des produits de pâte en distribuant une série de gouttes de la pâte à frire (30) à partir d'un certain nombre d'ouvertures (21) pour former un motif prédéterminé sur le transporteur (11, 13, 16), dans lequel au moins une partie du produit de pâte à réaliser est constituée à partir des gouttes provenant de plusieurs ouvertures individuellement contrôlables du nombre d'ouvertures (21) individuellement contrôlables.

13. Ensemble selon la revendication 12, dans lequel une seconde imprimante alimentaire à jet (40) est placée en amont de la première imprimante alimentaire à jet (20) sur le transporteur (10, 12, 15), au moins considérée dans une direction de transport (T) du transporteur, dans lequel la seconde imprimante alimentaire à jet (40) est adaptée pour distribuer des gouttes d'huile de cuisson (41) ou d'une graisse alimentaire comparable, sur le support (11, 13, 16) uniquement sur ces emplacements sur le support, où cette dernière, sur la pâte à frire (30), est appliquée par la première imprimante alimentaire à jet (20).

14. Ensemble selon la revendication 12 ou 13, dans lequel les ouvertures (21) sont des trous sensiblement circulaires et dans lequel la distance de centre à centre des deux trous adjacents est sensiblement quatre fois plus grande que le diamètre des petits trous, de préférence dans lequel les petits trous ont un diamètre sensiblement d'un millimètre et la distance centre à centre des deux trous adjacents est sensiblement de quatre millimètres.

15. Ensemble selon la revendication 12, 13 ou 14, dans lequel une autre imprimante alimentaire à jet (50) est placée en aval de la première imprimante alimentaire à jet (20) sur le transporteur (10, 12, 15), au moins considérée dans une direction de transport (T) du transporteur, dans lequel l'autre imprimante alimentaire à jet (50) est adaptée pour distribuer des gouttes de la pâte à frire (51) de pancake.

16. Ensemble selon l'une quelconque des revendications 12 à 15, comprenant en outre des éléments chauffants (14) pour chauffer le support (11, 13, 16) sensiblement à une température de cuisson nominale avant que le support n'atteigne la première imprimante alimentaire à jet (20).

FIG. 1

FIG. 2

FIG. 3

FIG. 4

FIG. 5

EP 2 364 593 B1

FIG. 6

15

FIG. 7

FIG. 8A

FIG. 8B

FIG. 8C

FIG. 9A

FIG. 9B

**REFERENCES CITED IN THE DESCRIPTION**

**Patent documents cited in the description**

- US 4583451 A
- US 3231149 A
- US 5142967 A
- GB 2450955 A
- WO 2008049119 A1
- EP 2172108 A1
- US 6280785 B1
- EP 2105051 A1
- DE 2000466